# EUROPÄISCHE PATENTSCHRIFT

(11) **EP 2 875 992 B1**
(45) Veröffentlichungstag und Bekanntmachung des Hinweises auf die Patenterteilung: **25.04.2018**
(21) Anmeldenummer: 14194124.5
(22) Anmeldetag: 20.11.2014
(51) Int. Cl.: B60N 2/24, F41H 7/04, B60N 2/42, B60N 2/22, B60N 2/70, B60N 2/015

(54) **AUFHÄNGBARER GURTSITZ FÜR EIN MILITÄRISCHES FAHRZEUG**
SUSPENDABLE BELT SEAT FOR A MILITARY VEHICLE
SIÈGE POUVANT ÊTRE SUSPENDU PAR UNE SANGLE POUR UN VÉHICULE MILITAIRE

(30) Priorität: 21.11.2013 DE 102013112889
(43) Veröffentlichungstag der Anmeldung: 27.05.2015
(73) Patentinhaber: Krauss-Maffei Wegmann GmbH & Co. KG, 80997 München (DE)
(72) Erfinder: Stoiber, Wolfgang, 80997 München (DE); Schuhmann, Manfred, 80997 München (DE)
(74) Vertreter: Feder Walter Ebert

(56) Entgegenhaltungen:
- EP-A1- 1 972 491
- EP-A1- 2 135 770
- WO-A1-2005/080126
- US-A- 2 829 702
- US-A- 5 806 910
- US-A1- 2008 246 317

## Beschreibung

Die Erfindung betrifft ein militärisches Fahrzeug mit einer im Dachbereich angeordneten Luke und einem Gurtsitz, der einen eine Rückenstütze aufweisenden Sitz und einen Gurt zur Aufhängung des Sitzes im Dachbereich des Fahrzeugs aufweist, wobei der Verlauf des Gurts zur Verstellung des Neigungswinkels der Rückenstütze über eine Einstellvorrichtung einstellbar ist. Ferner betrifft die Erfindung ein Verfahren zur Veränderung einer Sitzposition bei einem Gurtsitz in einem militärischen Fahrzeug mit einer im Dachbereich angeordneten Luke, wobei der Gurtsitz einen eine Rückenstütze aufweisenden Sitz und einem Gurt zur Aufhängung des Sitzes im Dachbereich des Fahrzeugs aufweist, wobei der Verlauf des Gurts zur Verstellung des Neigungswinkels der Rückenstütze über eine Einstellvorrichtung eingestellt wird.

Die Erfindung kann insbesondere bei militärischen Fahrzeugen eingesetzt werden.

Militärische Fahrzeuge sind oftmals Ansprengungen des Bodenbereichs, beispielsweise durch Minen, ausgesetzt. Solche Ansprengungen können den Fahrzeugboden beschädigen und nach innen wölben. Um den Fahrer vor den von solchen Ansprengungen ausgehenden Gefahren zu schützen, werden in militärischen Fahrzeugen oftmals Gurtsitze verwendet. Solche Gurtsitze weisen neben einem den Fahrer aufnehmendem Sitz mit einer Sitzfläche und einer Rückenstütze mehrere Gurte auf, über welche der Sitz im Dachbereich und ggf. zusätzlich an den Seitenwänden des Fahrzeugs frei über dem Fahrzeugboden aufgehängt ist.

Die Gurte sind an dem zumeist aus flexiblem Material bestehenden Sitz üblicherweise im vorderen sowie im hinteren Bereich der Sitzfläche angebunden. Oftmals sind die im hinteren Bereich der Sitzfläche angebundenen Gurte zudem mit der Rückenstütze gekoppelt, so dass die Rückenstütze über diese Gurte gehalten und ausgerichtet wird.

Zur Einstellung der Sitzposition des Fahrers kann die Länge einzelner Gurte verändert werden. Beispielsweise kann die Länge eines Gurts verkürzt werden, um den Sitz gegenüber dem Fahrzeugboden anzuheben. Umgekehrt kann die Länge des Gurts vergrößert werden, um den Sitz in Richtung des Fahrzeugbodens abzusenken.

Als nachteilig hat sich aber herausgestellt, dass sich durch solche Veränderungen der Gurtlänge im Wesentlichen nur die Höhe des gesamten Sitzes über dem Fahrzeugboden einstellen lässt. Die Sitzposition kann daher nur in einem eingeschränkten Bereich eingestellt werden, was sich insbesondere für sehr kleine bzw. sehr große Fahrer als nachteilig erweist.

Aus der US 5 806 910 A ist ein aufrollbarer Gurtsitz für ein Fahrzeug bekannt, der zwischen einer Aufrollvorrichtung im Fahrzeugboden und dem Fahrzeugdach befestigt ist.

Die EP 2 135 770 A1 beschriebt ein Sitzsystem für ein Fahrzeug, mit einem Sitz, der eine Rückenlehne und eine Sitzfläche umfasst, und einer Gurtaufhängung zur Aufhängung am Dach des Fahrzeugs.

Vor diesem Hintergrund stellt sich die Erfindung die **Aufgabe**, eine bessere Anpassung der Sitzposition an die Körpergröße der den Sitz benutzenden Person zu ermöglichen.

Bei einem militärischen Fahrzeug wird die Aufgabe durch die Merkmale des Patentanspruchs 1 **gelöst**.

Durch die Einstellvorrichtung wird es möglich, den Verlauf des Gurts zu verändern. Der Gurt ist mit dem Sitz derart gekoppelt, dass durch die Veränderung des Gurtverlaufs der Neigungswinkel der Rückenstütze bezüglich der Horizontalen beeinflusst wird, ohne dass dies die Stellung der Sitzfläche verändern würde. Über die Einstellung des Gurtverlaufs wird es somit möglich, die Sitzposition besser an die Körpergröße der den Sitz benutzenden Person anzupassen.

Der Gurt kann an einem Ende an dem Sitz angebunden sein und an dem anderen Ende über eine Gurtbefestigung mit dem Fahrzeug verbunden sein, so dass der Verlauf des Gurts durch die Positionen der beiden Enden des Gurts bestimmt wird. Zusätzlich kann eine Gurtführung vorgesehen sein, über welche der Gurt im Bereich zwischen seinen beiden Enden geführt ist. Die Gurtführung kann nach Art einer Gurtumlenkung ausgebildet sein, über welche der Gurt umgelenkt wird.

Erfindungsgemäß wirkt die Einstellvorrichtung zur Einstellung des Gurtverlaufs auf eine bewegbare Gurtbefestigung. Durch die Einstellvorrichtung kann die Gurtbefestigung bewegt werden, so dass das mit dem Fahrzeug verbundene Ende des Gurts verschoben wird und sich der Verlauf des Gurts verändert. Durch die bewegbare Gurtbefestigung kann ein bewegbarer Anbindungspunkt für den Gurt an dem Fahrzeug, insbesondere an dem Dach des Fahrzeugs, bereitgestellt werden.

Alternativ oder zusätzlich kann die Einstellvorrichtung zur Einstellung des Gurtverlaufs auf eine bewegbare Gurtführung wirken. Durch die Einstellvorrichtung kann die Gurtführung bewegt werden und insofern auch der Verlauf des Gurts in dem durch die Gurtführung geführten Bereich des Gurts verändert werden. Ist die Gurtführung über die Einstellvorrichtung bewegbar, die Gurtbefestigung jedoch feststehend ausgebildet, so wird der Gurt beim Vergrößern des Abstands von Gurtführung und Gurtbefestigung durch die Gurtführung in Richtung der Gurtbefestigung gezogen, was in einer erheblichen Anhebung der Sitzfläche resultieren kann. Bevorzugt ist daher die Gurtführung zusammen mit der Gurtbefestigung über die Einstellvorrichtung bewegbar, so dass der Abstand von Gurtführung und Gurtbefestigung konstant bleibt und sich nur geringfügige Änderungen der Höhe der Sitzfläche ergeben.

Bevorzugt ist die Gurtführung und/oder die Gurtumlenkung über die Einstellvorrichtung in Fahrzeuglängsrichtung bewegbar. Dies bringt den Vorteil mit sich, dass der Neigungswinkel des Gurts bezüglich der Horizontalen verändert werden kann.

Eine vorteilhafte Ausgestaltung sieht vor, dass die Gurtbefestigung als Aufrollvorrichtung ausgebildet ist, über welche der Gurt aufrollbar ist. Über die Aufrollvorrichtung kann die Länge des Gurts verändert werden, so dass zusätzlich zu dem Verlauf des Gurts auch die Länge des Gurts einstellbar ist, um die Sitzposition zu verändern. Über das Einstellen der Gurtlänge und des Gurtverlaufs können sowohl die Höhe des Sitzes als auch die Neigung der Rückenstütze unabhängig voneinander eingestellt werden.

In diesem Zusammenhang hat es sich als besonders vorteilhaft erwiesen, wenn die Aufrollvorrichtung zusammen mit einer Gurtführung bewegbar ist, durch welche der Gurt geführt ist. Wird die Gurtführung zur Verstellung der Neigung der Rückenstütze bewegt, so wird die Aufrollvorrichtung mit der Gurtbefestigung mit bewegt, so dass sich die Höhe des Sitzes nur geringfügig ändert.

Vorteilhaft ist es, wenn der Verlauf des Gurts feststellbar ist, so dass die eingestellte Sitzposition dauerhaft gehalten werden kann. Zum Feststellen des Gurtverlaufs kann eine Verriegelungsvorrichtung vorgesehen sein, über welche die Position der Gurtbefestigung und/oder der Gurtführung feststellbar ist.

Konstruktiv vorteilhaft ist es, wenn die Einstellvorrichtung eine im Dachbereich des Fahrzeugs montierbare Halterung und einen in der Halterung geführten Schlitten aufweist, an welchem die Gurtbefestigung und/oder die Gurtführung angeordnet ist. Der Schlitten kann gegenüber der Halterung linear bewegbar sein, so dass die Gurtbefestigung und/oder die Gurtführung gegenüber der Halterung verfahren werden können.

Bei dem Gurtsitz können grundsätzlich mehrere Gurte vorgesehen sein, deren Verlauf zur Verstellung des Neigungswinkels der Rückenstütze über eine Einstellvorrichtung einstellbar ist. Bevorzugt weist der Gurtsitz jedoch mindestens einen weiteren Gurt auf, dessen Verlauf nicht einstellbar ist. Der bezüglich seines Verlaufs nicht verstellbare Gurt kann beispielsweise im vorderen Bereich an dem Sitz angreifen, so dass der vordere Bereich der Sitzfläche beim Verstellen des Neigungswinkels der Rückenstütze unverändert bleibt.

Bevorzugt weist der Sitz eine flexible Sitzfläche und/oder eine flexible Rückenstütze auf, die sich an die Kontur des Körpers der den Sitz benutzenden Person anpassen können. Der Gurt, dessen Verlauf einstellbar ist, kann einen Teil der Rückenstütze bilden oder an der Rückenstütze anliegen. Insofern kann der Neigungswinkel des Gurts identisch zu dem Neigungswinkel der Rückenstütze sein. Alternativ ist es möglich, die Sitzfläche und/oder die Rückenstütze aus einem festen Material auszubilden.

Eine erfindungsgemäße Ausgestaltung des militärischen Fahrzeugs weist eine im Dachbereich angeordnete Luke auf, wobei die Gurtführung und/oder die Gurtbefestigung aus einer von der Luke entfernten, ersten Stellung in eine zweite Stellung bewegbar ist, in welcher die Gurtführung und/oder die Gurtbefestigung im Bereich der Luke angeordnet ist. Dies bringt den Vorteil mit sich, dass der Sitz aus einer für den Fahrer zum Fahren mit geschlossener Luke angenehmen Sitzposition in eine Sitzposition überführt werden kann, in welcher das Fahrzeug "über Luke" gefahren werden kann, also in einer Sitzposition, in welcher sich der Fahrer in der Luke befindet und direkte Sicht auf die Fahrzeugumgebung hat.

Durch die Einstellvorrichtung, die auf die bewegbare Gurtführung und/oder auf die bewegbare Gurtbefestigung wirkt, kann sowohl die Neigung der Rückenstütze, als auch die Höhe des Sitzes bzw. der Abstand des Sitzes zum Fahrzeugboden eingestellt werden. Zudem ist es mittels der Einstellvorrichtung möglich, den Sitz in Fahrzeuglängsrichtung zu verfahren. Demnach kann mit der Einstellvorrichtung zum einen die Position des Sitzes bestmöglich an die im Sitz sitzende Person angepasst werden und zum anderen der Sitz in eine Position bewegt werden, in der die Gurtführung und/oder die Gurtbefestigung im Bereich der Luke des Fahrzeugs angeordnet sind und sich der Sitz somit unterhalb der Luke befindet. Wird der Sitz in dieser Position angehoben, so ist es möglich, dass der Kopf einer im Sitz sitzenden Person die Luke durchdringt bzw. aus dem Fahrzeug hinausragt und damit die Fahrzeugumgebung von der Person direkt beobachtet werden kann.

Bei einem Verfahren der eingangs genannten Art wird die Aufgabe durch die Merkmale des Patentanspruchs 9 **gelöst**. Hierdurch ergeben sich dieselben Vorteile wie sie oben bereits im Zusammenhang mit dem Gurtsitz beschrieben wurden.

Bei dem militärischen Fahrzeug und dem Verfahren können gleichfalls die im Zusammenhang mit dem Gurtsitz beschriebenen Merkmale allein oder in Kombination Verwendung finden.

Weitere Einzelheiten und Vorteile der Erfindung sollen nachfolgend anhand eines in den Figuren dargestellten Ausführungsbeispiels erläutert werden. Darin zeigt:
- Fig. 1: eine schematische Seitenansicht eines militärischen Fahrzeugs mit einem Gurtsitz gemäß der Erfindung,
- Fig. 2: eine perspektivische Darstellung einer Einstellvorrichtung des Gurtsitzes,
- Fig. 3: eine perspektivische Darstellung eines Gurtsitzes gemäß der Erfindung,
- Fig. 4: eine schematische Seitenansicht des Fahrzeugs nach Fig. 1, wobei sich der Gurtsitz in einer ersten Sitzposition befindet,
- Fig. 5: eine schematische Seitenansicht des Fahrzeugs nach Fig. 4, wobei sich der Gurtsitz in einer zweiten Sitzposition befindet,
- Fig. 6: eine schematische Seitenansicht des Fahrzeugs nach Fig. 4, wobei sich der Gurtsitz in einer dritten Sitzposition befindet und
- Fig. 7: eine schematische Seitenansicht des Fahrzeugs nach Fig. 5, wobei der Sitz zusätzlich angehoben ist.

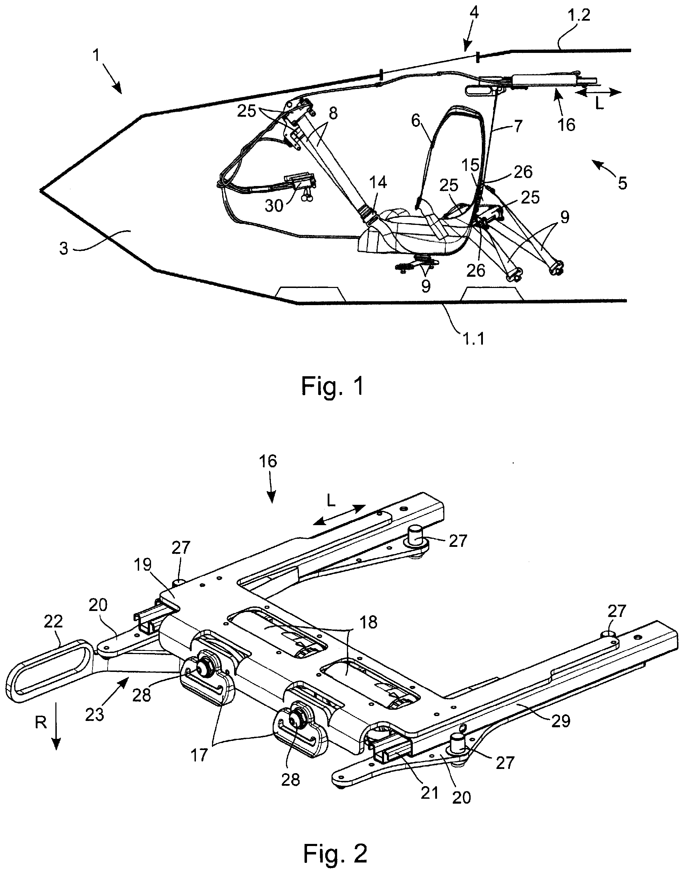

In der Fig. 1 ist schematisch der Innenraum 3 der Wanne eines militärischen Fahrzeugs 1 dargestellt. Gemäß dem Ausführungsbeispiel ist das Fahrzeug 1 als gepanzertes Kettenfahrzeug ausgebildet, wobei das Laufwerk des Fahrzeugs 1 aus Gründen der Übersichtlichkeit nicht abgebildet ist.

Um die Besatzungsmitglieder des Fahrzeugs 1 und insbesondere den Fahrer 24 vor den Gefahren zu schützen, die von Ansprengungen des Bodens 1.1 des Fahrzeugs 1 ausgehen können, sind im Innenraum 3 des Fahrzeugs 1 mehrere Gurtsitze 5 vorgesehen, von denen einer in Fig. 1 dargestellt ist. Dieser Gurtsitz 5 ist für den Fahrer 24 des Fahrzeugs 1 vorbehalten. Der Gurtsitz 5 kann auch für andere Personen 24 im Fahrzeug 1, z.B. den Kommandanten, vorgesehen sein.

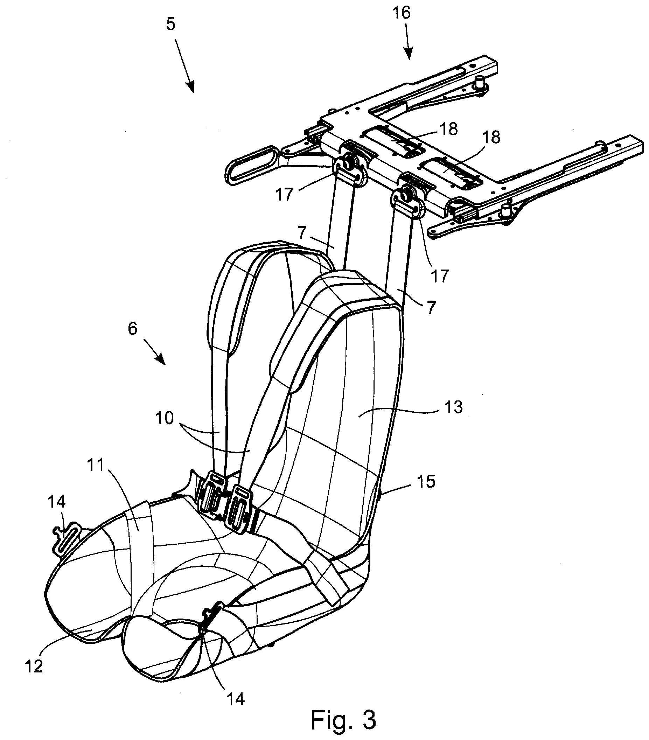

Der Gurtsitz 5 besteht im Wesentlichen aus einem Sitz 6, mehreren Gurten 7, 8, 9 zur Aufhängung des Sitzes 6 sowie einer Einstellvorrichtung 16, über welche die Sitzposition eingestellt werden kann. Die Komponenten des Gurtsitzes 5 sollen nachfolgend im Einzelnen beschrieben werden:
Wie der perspektivischen Darstellung in Fig. 3 entnommen werden kann, weist der Sitz 6 eine Sitzfläche 12 und eine als Rückenlehne ausgebildete Rückenstütze 13 auf. Die Sitzfläche 12 und die Rückenlehne 13 bestehen aus einem flexiblen Material und sind einstückig miteinander verbunden. Im vorderen Bereich der Sitzfläche 12 weist der Sitz 6 einen Beingurt 11 auf. Der Beingurt 11 ist an der rechten und der linken Seite der Sitzfläche 12 sowie in der Mitte der Sitzfläche 12 mit dem Sitz 6 verbunden und bildet zwei Schlaufen, durch welche die Oberschenkel des Fahrers 24 geführt werden können. Im Bereich der Rückenstütze 13 ist ein Sicherheitsgurt 10 an dem Sitz 6 angebunden. Der Sicherheitsgurt 10 ist als Vierpunktgurt mit zwei Anbindungspunkten an der Oberseite der Rückenstütze 13 und zwei Anbindungspunkten an der Sitzfläche 12 ausgebildet.

Fig. 1 zeigt, dass der Sitz 6 über mehrere Gurte 7, 8, 9 frei über dem Boden 1.1 des Fahrzeugs 1 aufgehängt ist. Im vorderen Bereich der Sitzfläche 12 sind zwei vordere Gurtanbindungen 14 vorgesehen, über welche zwei Frontgurte 8 mit dem Sitz verbunden werden können. Die vorderen Gurtanbindungen 14 sind nach Art von Steckverbindungen ausgeführt, was den Vorteil mit sich bringt, dass die Frontgurte 8 mit wenigen Handgriffen von dem Sitz 6 gelöst werden können, z. B. um den Einstig in den Sitz 6 zu erleichtern. Unterhalb der Sitzfläche 12 sowie im hinteren Bereich der Sitzfläche 12 sind Gurtanbindungen 26 für mehrere Seitengurte 9 vorgesehen. Über die Seitengurte 9 wird der Sitz 6 an den Seitenwänden des Fahrzeugs 1 aufgehängt.

Im Übergangsbereich zwischen der Sitzfläche 12 und der Rückenstütze 13 ist eine hintere Gurtanbindung 15 angeordnet. Über die hintere Gurtanbindung 15 sind zwei Gurte 7 an dem Sitz 6 angebunden, welche im Folgenden auch als Rückengurte 7 bezeichnet werden. Die Gurte 7 verlaufen parallel zueinander entlang der Rückenstütze 13 in Richtung des Dachbereichs des Fahrzeugs 1. Die Rückenstütze 13 liegt an den Gurten 7 an. Im Dachbereich sind die Gurte 7 über eine Gurtbefestigung 18 mit dem Fahrzeug 1 verbunden. Insofern ist der Sitz 6 über die Rückengurte 7 im Dachbereich des Fahrzeugs 1 aufgehängt.

Die Frontgurte 8 und die Seitengurte 9 sind als so genannte Fixgurte ausgebildet, welche einen vorgegebenen, unveränderlichen Verlauf aufweisen. Die Gurtanbindungen 14, 26 der Frontgurte 8 und der Seitengurte 9 an dem Sitz 6 sowie die Gurtaufhängungen 25 der Frontgurte 8 und der Seitengurte 9 an dem Fahrzeug sind feststehend ausgebildet. Allerdings ist die Länge der Frontgurte 8 und Seitengurte 9 einstellbar. Zum Verstellen der Gurtlänge der Frontgurte 8 und Seitengurte 9 sind die Gurtaufhängungen 25 dieser Gurte 8, 9 als Aufrollvorrichtungen ausgebildet, die über eine Steuereinrichtung 30 bedient werden können. Über das Verstellen der Länge der Gurte 8, 9 kann die Höhe der Sitzes 6 über dem Boden eingestellt werden. Insofern kann durch die Einstellung der Längen der Gurte 8, 9 in begrenzter Weise die Sitzposition verändert werden, um diese an die Körpergröße des Fahrers 24 anzupassen.

Um eine bessere Anpassung der Sitzposition an die Körpergröße des Fahrers 24 zu ermöglichen, ist der Verlauf der Rückengurte 7 zur Verstellung des Neigungswinkels A der Rückenstütze 13 über eine Einstellvorrichtung 16 einstellbar. Die Einstellvorrichtung 16 wirkt zur Einstellung des Gurtverlaufs auf die bewegbaren Gurtbefestigungen 18 ein. Über die Einstellvorrichtung 16 kann die Position der Gurtbefestigungen 18 verschoben und damit der Verlauf der Gurte 7 beeinflusst werden. Da die Rückenstütze 13 an den Gurten 7 anliegt, gibt der Verlauf der Rückengurte 7 auch den Verlauf der Rückenstütze 13 vor, so dass über die Verstellung des Neigungswinkels der Rückengurte 7 auch der Neigungswinkel A der Rückenstütze 13 verstellt werden kann.

Die Einstellvorrichtung 16 ist im Dachbereich des Fahrzeugs 1 angeordnet. Der Aufbau der Einstellvorrichtung 16 soll nachfolgend anhand der Darstellung in Fig. 2 beschrieben werden.

Die Einstellvorrichtung 16 weist eine im Dachbereich des Fahrzeugs 1 angeordnete Halterung 20 auf, welche aus zwei Trägern 20.1 gebildet wird, die in Fahrzeuglängsrichtung L verlaufen. Die Träger 20.1 sind über Befestigungselemente 27 mit dem Fahrzeug 1 verbunden. Auf den Trägern 20.1 sind zwei in Fahrzeuglängsrichtung L verlaufende Schienen 21 montiert, in welchen ein Schlitten 19 linearbeweglich geführt ist. Der Schlitten 19 weist zwei Schienen 29 auf, die mit den Schienen 21 der Halterung 20 korrespondieren. Insofern wird durch die Halterung 20 eine Linearführung für den Schlitten 19 bereitgestellt. Im vorderen und im hinteren Bereich der Halterung 20 sind Endanschläge vorgesehen, über welche Endstellungen des Schlittens 19 gegenüber der Halterung 20 definiert werden.

An dem Schlitten 19 sind die Gurtbefestigungen 18 der beiden Rückengurte 7 angeordnet. Die Gurtbefestigungen 18 sind als Aufrollvorrichtungen ausgebildet, über welche die Länge der Gurte 7 eingestellt werden kann. Die Steuerung der Aufrollvorrichtungen 18 erfolgt ebenfalls über die Steuereinrichtung 30. Die Gurte 7 verlaufen ausgehend von ihrer jeweiligen Gurtbefestigung 18 über eine Gurtführung 17 weiter in Richtung des Sitzes 6. Gemäß dem Ausführungsbeispiel sind die Gurtführungen 17 als Gurtumlenker ausgebildet. Die Gurtführungen 17 sind über Befestigungselemente 28 an dem Schlitten montiert und können zusammen mit den Gurtbefestigungen 18 über den Schlitten 19 in Fahrzeuglängsrichtung L bewegt werden. Bei Bewegung des Schlittens 19 werden Gurtbefestigung 18 und Gurtführung 17 verfahren, so dass sich der Verlauf der Gurte 7 verändert.

Zum Feststellen der Position des Schlittens 19 und damit auch der Gurtführung 17 und der Gurtbefestigung 18 weist die Einstellvorrichtung 16 eine Verriegelungsvorrichtung 23 auf, die über einen mit dem Schlitten 19 verbundenen Griff 22 bedienbar ist. Der Griff 22 ist federbelastet in Richtung einer in Fig. 2 gezeigten Verriegelungsstellung vorgespannt, in welcher der Schlitten 19 gegenüber der Halterung 20 festgelegt ist. In der verriegelten Stellung ist der Verlauf der Gurte 7 festgelegt. Zum Lösen der Verriegelung kann der Griff 22 nach unten in die Entriegelungsrichtung R gezogen werden. Bei gelöster Verriegelung kann der Schlitten 19 über den Griff 22 in Fahrzeuglängsrichtung L verschoben werden.

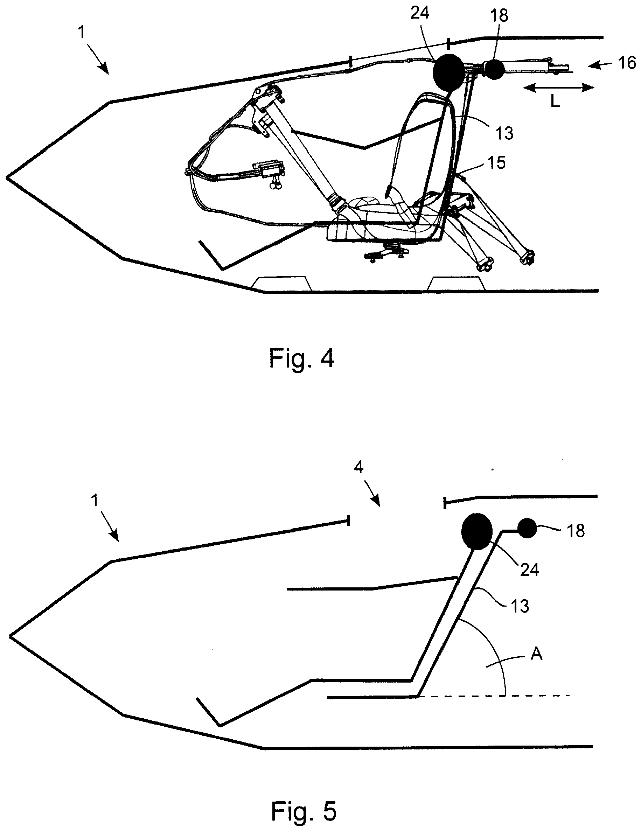

Die Einstellung der Sitzposition des Gurtsitzes 5 soll nachfolgend anhand der Darstellungen in Fig. 4 bis 7 näher erläutert werden.

In Fig. 4 ist schematisch eine Sitzposition dargestellt, bei der Neigungswinkel A gegenüber einer Horizontalen auf einen Wert im Bereich von 60° bis 90° eingestellt ist. Die Rückengurte 7 verlaufen von der Gurtanbindung 15 in Richtung der Einstellvorrichtung 16. Der Schlitten 19 mit der Gurtführung 17 und der Gurtbefestigung 18 ist in Fahrzeuglängsrichtung L nach vorne verfahren. Diese Sitzposition ist für einen Fahrer 24 mit durchschnittlicher Körpergröße geeignet.

Für einen größeren Fahrer 24, insbesondere einen Fahrer mit einem größeren Oberkörper kann die in der Fig. 4 gezeigte Sitzposition unangenehm sein, da die Gefahr besteht, dass der Fahrer 24 mit seinem Kopf nah an den Dachbereich des Fahrzeugs 1 kommt. Um einen solchen größeren Fahrer 24 in einer für ihn angenehmen Sitzposition in dem Gurtsitz 5 unterbringen zu können, kann der Neigungswinkel A der Rückenstütze 13 auf einen Wert eingestellt werden, der kleiner ist als der Neigungswinkel A gemäß Fig. 4. Eine solche Sitzposition ist in der Fig. 5 dargestellt. Der Schlitten 19 mit der Gurtführung 17 und der Gurtbefestigung 18 ist in Fahrzeuglängsrichtung L nach hinten verfahren, so dass sich ein vergleichsweise flacherer Gurtverlauf ergibt.

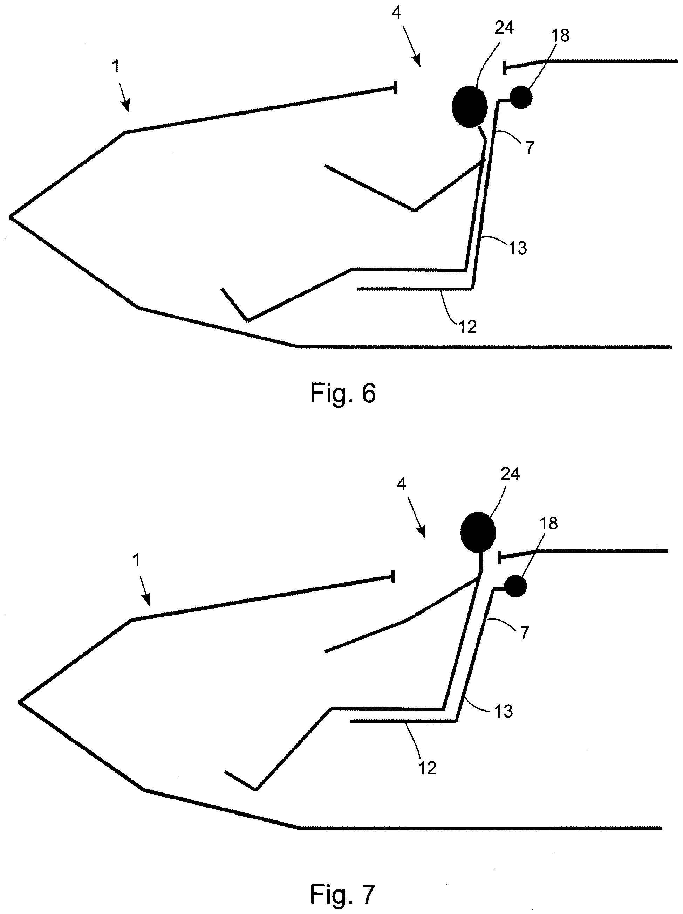

Nimmt ein Fahrer 24 in dem Gurtsitz 5 Platz, der einen vergleichsweise kleinen Oberkörper aufweist, so besteht die Möglichkeit, dass keine der in den Fig. 4 und Fig. 5 gezeigten Stellungen eine für diesen Fahrer angenehme Sitzposition darstellt. In diesem Fall kann der Schlitten 19 mit der Gurtführung 17 und der Gurtbefestigung 18 ist in Fahrzeuglängsrichtung L bis an den vorderen Endanschlag gefahren werden, so dass sich ein besonders steiler Gurtverlauf ergibt. Eine solche Sitzposition, bei welcher der Neigungswinkel A der Rückenstütze gegenüber der Horizontalen H nahezu 90° beträgt, ist in der Fig. 6 schematisch gezeigt.

Die Sitzposition gemäß Fig. 6 eignet sich zwar insbesondere für kleine Fahrer 24, kann aber auch in anderen Anwendungsfällen Verwendung finden. Oftmals ist es nämlich erwünscht, das Fahrzeug 1 nicht ausschließlich über indirekte Sicht, also mittels in dem Fahrzeug integrierter Sichtsysteme, zu fahren. Dies ist insbesondere dann der Fall, wenn keine akuten Bedrohungen für das Fahrzeug bestehen. Dann ist es vorteilhaft, wenn der Fahrer 24 das Fahrzeug "über Luke" fahren kann, d.h. dass der Fahrer 24 beim Fahren direkte Sicht aus einer Luke 4 des Fahrzeugs 1 hat. Auch andere Besatzungsmitglieder wie der Kommandant des Fahrzeugs 1 können mit einem entsprechenden Gurtsitz 5 "über Luke" fahren.

Bei dem Ausführungsbeispiel ist der Gurtsitz 5 daher im Bereich unterhalb einer Luke 4 des Fahrzeugs 1 angeordnet. Um das "Über Luke"-Fahren zu ermöglichen, werden die Gurtführung 17 und die Aufrollvorrichtungen 18 über die Einstellvorrichtung 16 aus der in Fig. 5 dargestellten, von der Luke 4 entfernten Stellung in eine Stellung bewegt, in welcher die Gurtführung 17 und die Aufrollvorrichtungen 18 im Bereich der Luke 4, insbesondere unterhalb der Luke 4, angeordnet sind. In einem weiteren Schritt werden dann die Rückengurte 7 über die Aufrollvorrichtungen 18 aufgerollt, so dass sich die Länge der Rückengurte 7 verkürzt. Die Frontgurte 8 und Seitengurte 9 werden ggf. entsprechend verstellt. Durch das Verkürzen der Rückengurte 7 wird der Sitz 6 insgesamt angehoben. Der Sitz 6 wird solange angehoben, bis der Kopf der Person 24, insbesondere des Fahrers 24, die geöffnete Luke 4 durchdringt, so dass ein "über Luke"-Fahren möglich ist.

Um den Sitz aus der in Fig. 7 dargestellten, angehobenen Position in die abgesenkte Position nach Fig. 6 zu überführen, ist es erforderlich, die Länge der Gurte 7, 8, 9 zu vergrößern. Die Vergrößerung der Länge kann dadurch erfolgen, dass die Aufrollvorrichtungen 18, 25 den Gurt freigeben, so dass diese durch das auf die Gurte 7, 8, 9 wirkende Gewicht des Fahrers 24 ausgezogen werden.

In dem vorstehend beschriebenen Fahrzeug 1 ist ein Gurtsitz 5 mit einem eine Rückenstütze 13 aufweisenden Sitz 6 vorgesehen. Der Sitz 6 ist über Gurte 7 im Dachbereich des Fahrzeugs aufgehängt und der Verlauf der Gurte 7 ist zur Verstellung des Neigungswinkels A der Rückenstütze 13 über eine Einstellvorrichtung 16 einstellbar.

**Bezugszeichen:**
- 1: Fahrzeug
- 1.1: Boden
- 1.2: Dach
- 3: Innenraum
- 4: Luke
- 5: Gurtsitz
- 6: Sitz
- 7: Gurt, Rückengurt
- 8: Frontgurt
- 9: Seitengurt
- 10: Sicherheitsgurt
- 11: Beingurt
- 12: Sitzfläche
- 13: Rückenstütze
- 14: vordere Gurtanbindung
- 15: hintere Gurtanbindung
- 16: Einstellvorrichtung
- 17: Gurtführung, Gurtumlenker
- 18: Gurtbefestigung, Aufrollvorrichtung
- 19: Schlitten
- 20: Halterung
- 20.1: Träger
- 21: Schiene
- 22: Griff
- 23: Verriegelungsvorrichtung
- 24: Person, Fahrer
- 25: Gurtbefestigung, Aufrollvorrichtung
- 26: Gurtanbindung
- 27: Befestigungselement
- 28: Befestigungselement
- 29: Schiene
- 30: Steuereinrichtung

- A: Neigungswinkel
- L: Fahrzeuglängsrichtung
- H: Horizontale
- R: Entriegelungsrichtung

## Patentansprüche

1. Militärisches Fahrzeug mit einer im Dachbereich angeordneten Luke (4) und einem Gurtsitz (5), der einen eine Rückenstütze (13) aufweisenden Sitz (6) und einen Gurt (7) zur Aufhängung des Sitzes (6) im Dachbereich des Fahrzeugs (1) aufweist,
wobei der Verlauf des Gurts (7) zur Verstellung des Neigungswinkels (A) der Rückenstütze (13) über eine Einstellvorrichtung (16) einstellbar ist, die zur Einstellung des Gurtverlaufs auf eine bewegbare Gurtführung (17) und/oder auf eine bewegbare Gurtbefestigung (18) wirkt, wobei die Gurtführung (17) und/oder die Gurtbefestigung (18) aus einer von der Luke (4) entfernten, ersten Stellung in eine zweite Stellung bewegbar ist, in welcher die Gurtführung (17) und/oder die Gurtbefestigung (18) im Bereich der Luke (4) angeordnet ist und in welcher der Sitz (6) derart anhebbar ist, dass ein über-Luke-Fahren möglich ist.

2. Militärisches Fahrzeug nach einem der vorhergehenden Ansprüche,
**dadurch gekennzeichnet, dass** über die Einstellvorrichtung (16) die Gurtführung (17) und/oder die Gurtbefestigung (18) in Fahrzeuglängsrichtung (L) bewegbar ist.

3. Militärisches Fahrzeug nach einem der vorhergehenden Ansprüche,
**dadurch gekennzeichnet, dass** die Gurtbefestigung (18) als Aufrollvorrichtung ausgebildet ist, über welche der Gurt (7) aufrollbar ist.

4. Militärisches Fahrzeug nach Anspruch 3, **dadurch gekennzeichnet, dass** die Aufrollvorrichtung zusammen mit einer Gurtführung (17) bewegbar ist, durch welche der Gurt (7) geführt ist.

5. Militärisches Fahrzeug nach einem der vorhergehenden Ansprüche,
**dadurch gekennzeichnet, dass** der Verlauf des Gurts (7) feststellbar ist.

6. Militärisches Fahrzeug nach einem der vorhergehenden Ansprüche,
**dadurch gekennzeichnet, dass** die Einstellvorrichtung (16) eine im Dachbereich des Fahrzeugs (1) montierbare Halterung (20) und einen in der Halterung (20) geführten Schlitten (19) aufweist, an welchem die Gurtbefestigung (18) und/oder die Gurtführung (17) angeordnet ist.

7. Militärisches Fahrzeug nach einem der vorhergehenden Ansprüche, **gekennzeichnet durch** einen weiteren Gurt (8, 9), dessen Verlauf nicht verstellbar ist.

8. Militärisches Fahrzeug nach einem der vorhergehenden Ansprüche,
**dadurch gekennzeichnet, dass** der Sitz (6) eine flexible Sitzfläche (12) und/oder eine flexible Rückenstütze (13) aufweist.

9. Verfahren zur Veränderung einer Sitzposition bei einem Gurtsitz (5) in einem militärischen Fahrzeug mit einer im Dachbereich angeordneten Luke (4), wobei der Gurtsitz (5) einen eine Rückenstütze (13) aufweisenden Sitz (6) und einem Gurt (7) zur Aufhängung des Sitzes (6) im Dachbereich des Fahrzeugs (1) aufweist, wobei der Verlauf des Gurts (7) zur Verstellung des Neigungswinkels (A) der Rückenstütze (13) über eine Einstellvorrichtung (16) eingestellt wird wobei die Einstellvorrichtung (16) zur Einstellung des Gurtverlaufs auf eine bewegbare Gurtführung (17) und/oder die Gurtbefestigung (18) wirkt und wobei die Gurtführung (17) und/oder die Gurtbefestigung (18) aus einer von der Luke (4) entfernten ersten Stellung in eine zweite Stellung bewegt wird, in welcher die Gurtführung (17) und/oder die Gurtbefestigung (18) im Bereich der Luke (4) angeordnet ist und in welcher der Sitz derart angehoben wird, dass ein über-Luke-Fahren möglich ist.

## Claims

1. Military vehicle having a hatch (4) which is arranged in the roof region, and having a belt seat (5) which has a seat (6), which has a backrest (13), and a belt (7) for suspending the seat (6) in the roof region of the vehicle (1),
it being possible for the course of the belt (7) to be set via a setting apparatus (16) in order to adjust the angle of inclination (A) of the backrest (13), which setting apparatus (16) acts on a movable belt guide (17) and/or on a movable belt mount (18) in order to set the belt course, it being possible for the belt guide (17) and/or the belt mount (18) to be moved out of a first position, which is remote from the hatch (4), into a second position, in which the belt guide (17) and/or the belt mount (18) is arranged in the region of the hatch (4), and in which the seat (6) can be raised in such a way that driving above the hatch is possible.

2. Military vehicle according to one of the preceding claims, **characterized in that** the belt guide (17) and/or the belt mount (18) can be moved in the vehicle longitudinal direction (L) via the setting apparatus (16).

3. Military vehicle according to either of the preceding claims, **characterized in that** the belt mount (18) is configured as a retractor apparatus, via which the belt (7) can be wound up.

4. Military vehicle according to Claim 3, **characterized in that** the retractor apparatus can be moved together with a belt guide (17), by way of which the belt (7) is guided.

5. Military vehicle according to one of the preceding claims, **characterized in that** the course of the belt (7) can be fixed.

6. Military vehicle according to one of the preceding claims, **characterized in that** the setting apparatus (16) has a holding device (20), which can be mounted in the roof region of the vehicle (1), and a carriage (19) which is guided in the holding device (20) and on which the belt mount (18) and/or the belt guide (17) is arranged.

7. Military vehicle according to one of the preceding claims, **characterized by** a further belt (8, 9), the course of which cannot be adjusted.

8. Military vehicle according to one of the preceding claims, **characterized in that** the seat (6) has a flexible seat face (12) and/or a flexible backrest (13).

9. Method for changing a seat position in a belt seat (5) in a military vehicle having a hatch (4) which is arranged in the roof region, the belt seat (5) having a seat (6), which has a backrest (13), and a belt (7) for suspending the seat (6) in the roof region of the vehicle (1), the course of the belt (7) being set via a setting apparatus (16) in order to adjust the angle of inclination (A) of the backrest (13), the setting apparatus (16) acting on a movable belt guide (17) and/or the belt mount (18) in order to set the belt course, and the belt guide (17) and/or the belt mount (18) being moved out of a first position, which is remote from the hatch (4), into a second position, in which the belt guide (17) and/or the belt mount (18) is arranged in the region of the hatch (4), and in which the seat is raised in such a way that driving above the hatch is possible.

## Revendications

1. Véhicule militaire avec une trappe (4) disposée dans la zone de toit et un siège de sangle (5) qui présente un siège (6), présentant un dossier (13), et une sangle (7) destinée à la suspension du siège (6) dans la zone de toit du véhicule (1),
le tracé de la sangle (7) pouvant être réglé pour le déplacement de l'angle d'inclinaison (A) du dossier (13) par le biais d'un dispositif de réglage (16) qui agit sur un guidage de sangle (17) mobile et/ou sur une fixation de sangle (18) mobile pour le réglage du tracé de la sangle, le guidage de sangle (17) et/ou la fixation de sangle (18) étant mobile à partir d'une première position éloignée de la trappe (4) jusqu'à une deuxième position dans laquelle le guidage de sangle (17) et/ou la fixation de sangle (18) est disposée dans la zone de la trappe (4) et dans laquelle le siège (6) peut être soulevé de façon à permettre une conduite par-dessus la trappe.

2. Véhicule militaire selon l'une des revendications précédentes, **caractérisé en ce que** le guidage de sangle (17) et/ou la fixation de sangle (18) est mobile dans la direction longitudinale du véhicule (1) par le biais du dispositif de réglage (16).

3. Véhicule militaire selon l'une des revendications précédentes, **caractérisé en ce que** la fixation de sangle (18) est constituée en tant que dispositif d'enroulement par le biais duquel la sangle (7) peut être enroulée.

4. Véhicule militaire selon la revendication 3, **caractérisé en ce que** le dispositif d'enroulement est mobile conjointement avec un guidage de sangle (17) par lequel la sangle (7) est guidée.

5. Véhicule militaire selon l'une des revendications précédentes, **caractérisé en ce que** le tracé de la sangle (7) peut être immobilisé.

6. Véhicule militaire selon l'une des revendications précédentes, **caractérisé en ce que** le dispositif de réglage (16) présente un support (20) pouvant être monté dans la zone de toit du véhicule (1), et un chariot (19), guidé dans le support (20), sur lequel est disposée la fixation de sangle (18) et/ou le guidage de sangle (17).

7. Véhicule militaire selon l'une des revendications précédentes, **caractérisé par** une autre sangle (8, 9) dont le tracé ne peut être déplacé.

8. Véhicule militaire selon l'une des revendications précédentes, **caractérisé en ce que** le siège (6) présente une surface d'assise (12) flexible et/ou un dossier (13) flexible.

9. Procédé destiné à la modification d'une position d'assise en présence d'un siège de sangle (5) dans un véhicule militaire avec une trappe (4) disposée dans la zone de toit, le siège de sangle (5) présentant un siège (6) présentant un dossier (13), et une sangle (7) destinée à la suspension du siège (6) dans la zone de toit du véhicule (1), le tracé de la sangle (7) étant réglé pour le déplacement de l'angle d'inclinaison (A) du dossier (13) par le biais d'un dispositif de réglage (16), le dispositif de réglage (16) agissant sur un guidage de sangle (17) mobile et/ou sur la fixation de sangle (18) pour le réglage du tracé de la sangle, le guidage de sangle (17) et/ou la fixation de sangle (18) étant déplacée à partir d'une première position éloignée de la trappe (4) jusqu'à une deuxième position dans laquelle le guidage de sangle (17) et/ou la fixation de sangle (18) est disposée dans la zone de la trappe (4) et dans laquelle le siège est soulevé de façon à permettre une conduite par-dessus la trappe.
